# EUROPEAN PATENT APPLICATION

(11) **EP 0 612 653 A1**
(43) Date of publication of application: **31.08.1994**
(21) Application number: 94300609.8
(22) Date of filing: 27.01.1994
(51) Int. Cl.: B62D 43/04

(54) **Winching device**

(30) Priority: 02.02.1993 GB 9302002
(71) Applicant: Metallifacture Limited, Redhill Nottingham NG5 8PY (GB)
(72) Inventor: Parvinmehr, Hossein, Duffield, Derbyshire DE3 4DT (GB)
(74) Representative: MacGregor, Gordon

(57) **Abstract**

A safety catch comprises an elongate housing (22) having an opening (30) in its wall (24). A sleeve (16) is mounted on a winch cable (14) and is positioned in the housing (22) to define a space (23) between the sleeve (16) and the housing wall (24). The sleeve (14) is guidably movable along the housing (22). An arm (25) having a hooked end (29) is pivotally movable relative to the housing (22) between a normal position in which the hook of the arm (25) is biased to project through the opening (30), and a second position in which the hook (29) is retracted from the opening (30). Limit means in the form of a plate (19) projects from the sleeve (16) into the space (23) so that the plate (19) is engageable with the hook (29) in the normal position, to limit said movement of the sleeve. (16). There is no aperture in the sleeve that is capable of engaging the hook.

## Description

This invention relates to a safety catch for use with a winching device.

In some vehicles, it is usual to support a spare wheel beneath the body of the vehicle. The spare wheel is held by a wheel carrying assembly, in a stowed position, with the tyre pressed against formations of the body. The assembly includes a winching device having a winch cable that holds the spare wheel while the cable is under tension. The winch can be operated by means of a detachable handle to lower the spare wheel on the cable to an accessible position. The device includes a pulley on which the cable is wound.

The winching device incorporates an eccentric gear mechanism which provides a self-locking action, whereby a force exerted on the cable does not cause rotation of the pulley. The pulley should be rotatable only by rotation of an actuating shaft, designed to be engaged by the handle.

It has been found that vibration of the vehicle, in use, sometimes causes the cable to unwind, so that the spare wheel comes loose. This produces more substantial vibration, which can lead to damage to the winching device, the spare wheel carrying assembly, or the spare wheel itself, and possibly lead to release of the spare wheel. A winching device which overcomes the vibration problem is disclosed in GB-A-2251589.

This winching device incorporates a safety catch in order to avoid inadvertent lowering of the wheel carrying assembly in the event that the eccentric gear mechanism fails to lock.

The safety catch disclosed in GB-A-2251589 comprises an elongate housing having an opening in one of its walls. A member in the form of a sleeve is mounted on the winch cable and is positioned in the housing to define a space between the sleeve and the housing, the sleeve being guidably movable longitudinally of the housing. An aperture is provided in the sleeve wall and is aligned with the opening in the housing wall when the winch cable is wound sufficiently for the spare wheel to be fully retracted under the vehicle body. An arm having a catch portion in the form of a hooked end is pivotally attached to the outside of the housing, the arm being pivotable between a normal position in which the hooked end is biased to project through the opening in the housing and the aperture in the sleeve, and a second position in which the hooked end is retracted from both the aperture and the opening.

In order to release the safety catch disclosed in GB-A-2251589, the arm is pivoted against the bias into its second position while the cable is wound sufficiently to retract the spare wheel under the vehicle body. When the spare wheel is fully retracted the opening in the housing wall is aligned with the aperture in the sleeve. The arm is then allowed to return to its normal position under the influence of the bias. As the arm moves towards this position, the hooked end accesses the opening in the housing and then engages in the aperture in the sleeve. In this way the safety catch is set, and movement of the sleeve longitudinally of the housing is limited, so that movement of the spare wheel from its stowed position is also limited, if the cable should accidentally unwind due to a failure of the eccentric gear mechanism to self-lock.

It has been found, however, that there are problems with the safety catch disclosed in GB-A-2251589. The hooked end will not access the opening and engage in the sleeve aperture if the cable has not been fully wound, so that failure of the gear mechanism to self-lock results in the spare wheel being released. Also, it has been found that the hooked end of the arm can disengage from the aperture in the sleeve when the vehicle is on a slope or camber.

It is an object of the invention to provide a winching device, which overcomes these problems.

The pre-characterising part of claim 1 is based on GB-A-2251589, and is directed to a safety catch for use with a winch cable, the safety catch comprising an elongate housing having an opening in a wall thereof, a member mountable on the winch cable and positioned in the housing to define a space between the member and the housing wall, the member being guidable movable longitudinally of the housing, an arm comprising a catch portion and being located externally of the housing, the arm being pivotally movable relative to the housing between a first position in which the catch portion is biased to project through the opening and a second position in which the latch portion is retracted from the opening, the member having limit means engageable with the catch portion, in the first position, to limit said movement of the member in the housing. The distinguishing features of the present invention are characterised in that there is no aperture in the member capable of engaging the catch portion and the limit means comprises a projection of the member into said space.

Reference is now made to the accompanying drawings, in which:-
Figure 1 is a side view, partly in section, of a winch incorporating a safety catch according to the invention;

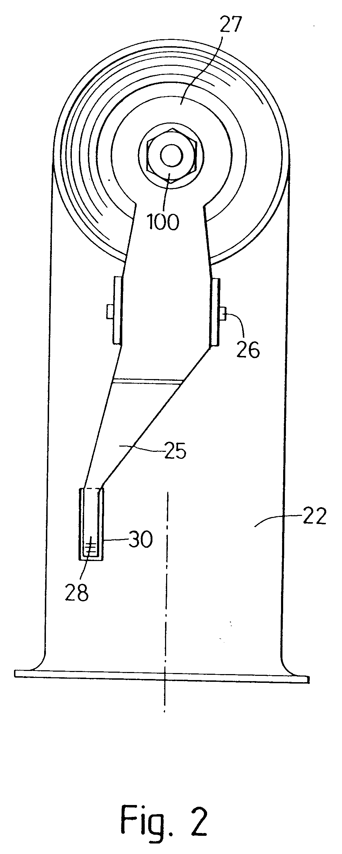

Figure 2 is a front view of the winch of Figure 1 with some parts removed; and
Figure 3 is a detail sectional view, similar to Figure 1, but showing the catch in its engaged state.

The drawings illustrate a winch 10 comprising a wheel bracket 11, which is used in a conventional manner to bolt to a vehicle spare wheel (not shown), using one or more bolts 12, under a vehicle chassis (not shown). The bracket 11 is suspended by a suspension device comprising a cylindrical support member 32 attached to the bracket and supported from a winch cable 14 attached at one end to a bolt 13. The shank of the bolt is mounted within a sleeve 16 and a cup-shaped plate 19 is trapped between the head 13a of the bolt and an end 20 of the sleeve. A nut 18c is screwed on to the free end of the bolt and tightened against the opposite end 21 of the sleeve through a washer 18d. The sleeve has an external flange 18b and the support member 32 is resiliently held against the flange by a helical spring 18a engaged between the flange and the washer 18d.

The winch 10 comprises a casing which includes an elongate, cylindrical housing 22 in which the sleeve 16 is positioned so as to define a space 23 between the sleeve 16 and the wall 24 of the housing 22. The plate 19 and guide member 32 project from the sleeve 16, across the space 23, and to the housing wall 24.

An arm 25 is pivotally attached at a pivot point 26 to the outside of the casing, the pivot point 26 being intermediate the ends 27, 28 of the arm 25. The arm 25 has a catch portion in the form of a hook 29 at one end 28.

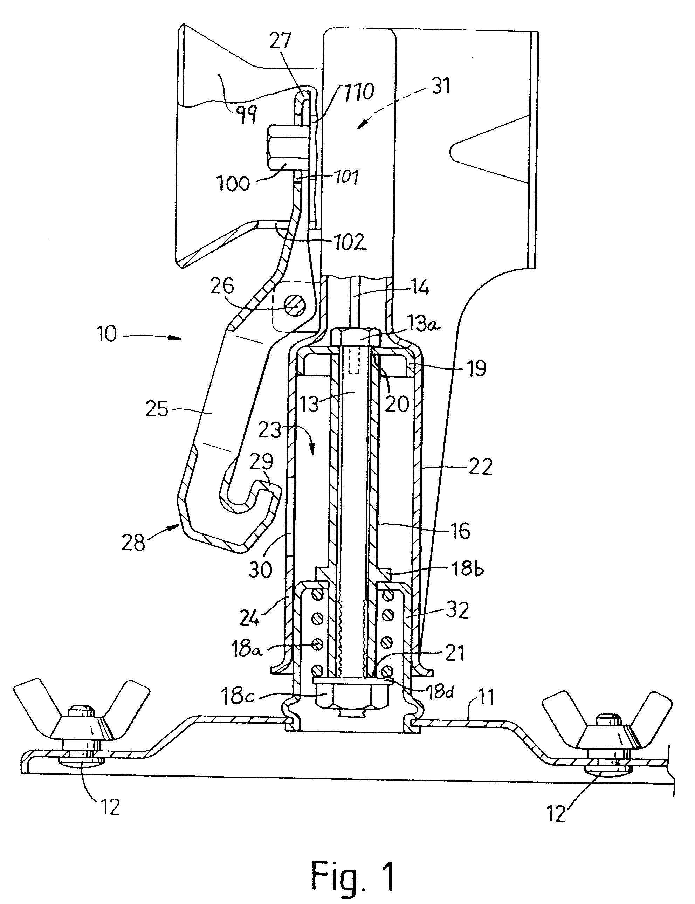

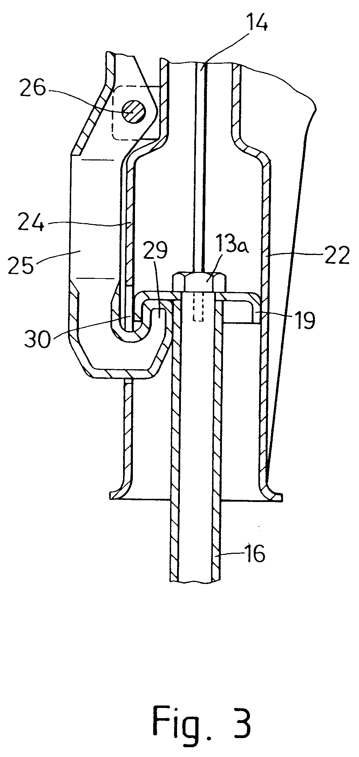

An opening 30 is provided in the housing wall 24, the opening 30 being dimensioned and positioned to allow the hook 29 of the arm 25 to pass therethrough. The arm 25 is biased to an operable position (Fig. 3), in which the hook 29 projects through the opening 30 and into the space 23 between the sleeve 16 and the housing wall 24. The arm 25 can be biased using any conventional biasing means, e.g. a spring. The arm can be pivotally moved from this position against the bias to a retracted position, in which the hook 29 is retracted from the opening 30 (as in Fig. 1), so that the hook is clear of the space 23.

The winch has a self-locking winch mechanism 31 which may be similar in structure to that disclosed in any one of GB-A-2251589, GB-A-1506244, GB-A-2235911 and US-A4625947 and is actuable by rotation of an actuating shaft 110. The winch mechanism is operated in a manner as described in GB-A-2251589. The shaft has a hexagonal hub 100 engageable by a tool (not shown) for engaging the hub. A tool guide 99 is provided for guiding the tool socket onto the hub 100. In use, the tool socket is engaged with the hub 100 and rotated, thereby rotating the actuating shaft, unwinding the winch cable 14 and lowering the bracket 11 from the vehicle chassis. The end part 27 of the arm 25 opposite to the hook 29, extends beyond the hub 100 and has a hole 101 which receives the hub, allowing the arm 25 to move relative to the hub 100, as the arm moves between the operable and retracted positions. A slot 102 is also provided in the tool guide 99, the arm 25 also being movable in the slot 102 as it moves between the operable and retracted positions. Movement of the arm 25 from the retracted position to the operable position, against the bias, is effected when the tool is engaged on the hub 100. The tool engages the end part 27 of the arm to effect this movement.

In the retracted position, the hook 29 is clear of the space 23, so that the cup-shaped plate 19 is free to move past the opening 30 as the winch cable is unwound.

On disengagement of the actuating tool from the hub 100, the arm 25 returns to its operable position under the influence of the bias, so that the hook 29 occupies the space 23 between the sleeve 16 and the housing wall 24.

The guide member 32 and plate 19 act to guide longitudinal movement of the sleeve 16 in the housing 22.

In the event of failure of the self-locking winch mechanism, the winch cable 14 will unwind, causing the wheel bracket 11 to move away from the vehicle chassis. As the cable 14 unwinds, however, the cup-shaped plate 19 moves in the space 23 towards the hook 29 that occupies the space 23. As shown in Figure 3, engagement of the hook 29 and the plate 19 limits further movement of the sleeve 16, in the housing, thereby preventing the cable 14 from slipping further.

The provision of a cup-shaped plate 19, wherein the opening of the cup faces the hook 29 in the operable position is preferable to ensure engagement with the hook 29.

The safety catch overcomes the problems met with the prior art safety catches, because it does not rely upon the presence of an aperture in the wall of the sleeve 16 to engage the hook 29. The safety catch of the present invention avoids the need fully to wind the winch cable 14 in order to align the opening 30 in the housing wall 24 with such an aperture. The safety catch of the present invention will operate even in cases where the cable 14 is not fully wound. In addition the safety catch of the present invention performs well when the vehicle is on a slope or camber.

## Claims

1. A safety catch for use with a winch cable (14), the safety catch comprising an elongate housing (22) having an opening (30) in a wall (24) thereof, a member (16) mountable on the winch cable (14) and positioned in the housing (22) to define a space (23) between the member (16) and the housing wall (24), the member (16) being guidably movable longitudinally of the housing (22), an arm (25) comprising a catch portion (29) and being located externally of the housing (22), the arm (25) being pivotally movable relative to the housing (22) between a first position in which the catch portion (29) is biased to project through the opening (30) and a second position in which the catch portion (29) is retracted from the opening (30), the member (16) having limit means (19) engageable with the catch portion (29), in the first position, to limit said movement of the member (16) in the housing (22), characterised in that there is no aperture in the sidewall of the member (16) capable of engaging the catch portion (29), and the limit means (19) comprises a projection of the member (16) into said space (23).

2. A safety catch according to Claim 1, wherein the projection is a plate (19) secured to the member (16).

3. A safety catch according to Claim 1 or 2, wherein the projection (19) is cup-shaped with the opening of the cup facing the catch portion (29) in its normal position.

4. A vehicle spare wheel winch (10) including a safety catch according to any preceding claim, the winch (10) comprising a winching mechanism (31), a winch cable (14) carrying said member (16) and a wheel bracket (11) carried by the member (16) and being adapted for attachment to a wheel.

5. A winch according to Claim 4, comprising a casing including the housing (22), the arm (25) being pivotally mounted on the casing.

6. A winch according to Claim 4 or 5 wherein the winch mechanism includes an actuating shaft (110) having a hub (100) which is engageable by a tool for rotation of the shaft, the arm (25) being located such that, when the tool engages the hub (100), the tool also engages the arm (25) to move the arm (25) against the bias from the first position to the second position.

7. A winch according to Claim 6, wherein the arm (25) is pivotally mounted intermediate its ends (27,28) and the end part (27) of the arm opposite to the catch portion (29) is located for engagement by the tool to move the arm (25) against the bias from the first position to the second position.
